(19) Europäisches Patentamt
European Patent Office
Office européen des brevets

(11) **EP 2 562 059 B1**

(12) **EUROPEAN PATENT SPECIFICATION**

(45) Date of publication and mention
of the grant of the patent:
**06.07.2016 Bulletin 2016/27**

(51) Int Cl.:
***B60T 8/1755*** ^(2006.01)

(21) Application number: **11178817.0**

(22) Date of filing: **25.08.2011**

(54) **Method and arrangement for assisting a driver of a vehicle to turn the vehicle when driving during glare ice conditions**

Verfahren und Anordnung zur Unterstützung eines Fahrzeugfahrers beim Lenken des Fahrzeugs beim Fahren unter Glatteisbedingungen

Procédé et agencement pour aider le conducteur d'un véhicule à tourner le véhicule en cas de circulation dans des conditions de gel éblouissant

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.02.2013 Bulletin 2013/09**

(73) Proprietor: **Volvo Car Corporation**
**40 531 Göteborg (SE)**

(72) Inventor: **Jonasson, Mats**
**43349 Partille (SE)**

(74) Representative: **Kraenzmer, Martin et al**
**Volvo Car Corporation**
**Intellectual Property**
**Dept 50094 HBBVN**
**405 31 Göteborg (SE)**

(56) References cited:
**WO-A1-02/12037     WO-A1-2005/085030**

## Description

### Technical field

Embodiments herein relate to an arrangement for assisting a driver of a vehicle to turn the vehicle when driving during glare ice conditions. In particular they relate to an arrangement for assisting a driver of a vehicle to turn the vehicle when driving during glare ice conditions, the vehicle having a steering system, a plurality of wheels and a brake system allowing individual braking of the respective wheels of the vehicle.

Embodiments herein further relate to a method in a controller for assisting a driver of a vehicle to turn the vehicle when driving during glare ice conditions. In particular they relate to a method in a controller for assisting a driver of a vehicle to turn the vehicle when driving during glare ice conditions, the vehicle having a steering system, a plurality of wheels and a brake system allowing individual braking of the respective wheels of the vehicle.

### Background

During vehicle travel on roads displaying so called glare ice (black ice) conditions, where the friction coefficient is typically below 0.1, it is likely that today's anti-skid vehicle control systems will be unable to provide sufficient assistance if the vehicle starts to skid on the ice. Thus, there is an increased risk of the vehicle departing from the road or lane travelled.

One typical situation when this may occur is during downhill travel on a glare ice road. Even if the brakes of the vehicle are fully applied on the glare ice road the vehicle will not decelerate as the glare ice will provide no or very limited grip. The friction between the road and vehicle tires may most likely be unable to hold the vehicle on the glare ice road due to the road gradient.

Today's anti-skid control systems will attempt to stabilize a vehicle which start to skid on the glare ice by applying individual brake actuations in order to increase longitudinal tire forces on the braked wheel/wheels. This will, however, be of limited use when the driver commands full braking.

Conventional vehicle controllers, e.g. so called Electronic Stability Controllers (ESC), as disclosed for example in WO 02/12037 A1, attempt to assist a driver during turning by applying the brakes at one or more wheels of the vehicle. If the driver brakes hard and the conventional ESC tries to stabilize the vehicle, the vehicle will not turn since all wheels are hardly braked, and in turn, all tire forces are saturated.

Thus, a brake intervention from today's conventional anti-skid control systems when travelling on a glare ice road would most likely fail to bring the vehicle back to the originally travelled lane once the vehicle starts to skid. As the vehicle then will continue to skid, possibly heading towards the opposite lane or towards a road departure, a potentially hazardous situation may rapidly occur.

### Summary

Embodiments herein aim to provide an improved arrangement for assisting a driver of a vehicle to turn the vehicle when driving during glare ice conditions, the vehicle having a steering system, a plurality of wheels and a brake system allowing individual braking of the respective wheels of the vehicle.

This is provided by an arrangement which comprises a controller arranged to: detect if the vehicle accelerates after the brakes of the vehicle have been applied; detect a driver command to turn the vehicle in either direction; and if all detections are positive release the brake force on a side of the vehicle opposite to the detected turning command direction.

Releasing the brake force on a side of the vehicle opposite to the detected turning command direction generates a yaw moment, due to the created unbalance of generated longitudinal tyre forces on the left hand side and right hand side of the vehicle respectively, where the yaw moment thus generated acts so as to turn the vehicle back towards the original lane of travel. In this way the occurrence of potentially dangerous situation may be prevented.

According to a second aspect the controller is further arranged to detect if a vehicle velocity is below a predetermined velocity threshold.

Detection if a vehicle velocity is below a predetermined velocity threshold, in accordance with the second aspect, enables a differentiation between high-speed requirements, where a reduction of speed usually will be of highest priority, and low-speed requirements, e.g. when driving slowly on glare ice, where it is more likely that the ability to control the vehicle through turning is of higher priority than a limited reduction of speed.

According to a third aspect the controller, in order to detect if the vehicle accelerates after the brakes of the vehicle have been applied, is arranged to: detect low friction between the road and the wheels of the vehicle; and detect a road gradient downhill.

According to a fourth aspect the controller, in order to detect low friction between the road and the wheels of the vehicle and detect a road gradient downhill, is arranged to rely on wheel speed sensors and vehicle accelerometers.

Detecting if the vehicle accelerates after the brakes of the vehicle have been applied, as described for the third and fourth aspects respectively, enables use of commonly available vehicle sensors, such as wheel speed sensors and vehicle accelerometers, for this detection, which provides for a low cost of implementation as well as reliable and proven detection.

The method provides for the same advantages as described above for aspects of the arrangement.

**Brief description of the drawings**

In the following, embodiments herein will be described in greater detail by way of example only with reference to attached drawings, in which

Figs. 1a, 1b and 1c are schematic illustrations of the underlying principles of the controller.

Fig. 2 is a schematic diagram illustrating how tyre forces are controlled through braking, spinning and free rolling.

Fig. 3 is a schematic block diagram illustrating the interaction between the driver request, the controller and the glare ice detection and how these are connected to the brake actuator for affecting the vehicle dynamics.

Still other objects and features of embodiments herein will become apparent from the following detailed description considered in conjunction with the accompanying drawings. It is to be understood, however, that the drawings are designed solely for purposes of illustration and not as a definition of the limits hereof, for which reference should be made to the appended claims. It should be further understood that the drawings are not necessarily drawn to scale and that, unless otherwise indicated, they are merely intended to conceptually illustrate the structures and procedures described herein.

**Description of embodiments**

In overview, embodiments herein relate to an arrangement for assisting a driver of a vehicle to turn the vehicle when driving during glare ice conditions, the vehicle having a steering system, a plurality of wheels and a brake system allowing individual braking of the respective wheels of the vehicle.

The arrangement comprises a controller arranged to detect if the vehicle accelerates after the brakes of the vehicle have been applied. The controller is further arranged to detect a driver command to turn the vehicle in either direction. If all detections are positive the controller is further arranged to release the brake force on a side of the vehicle opposite to the detected turning command direction.

In one embodiment the controller is further arranged to detect if a vehicle velocity is below a predetermined velocity threshold.

In a further embodiment the controller, in order to detect if the vehicle accelerates after the brakes of the vehicle have been applied, is further arranged to detect low friction between the road and the wheels of the vehicle, and to detect a road gradient downhill.

In order to detect low friction between the road and the wheels of the vehicle and detect a road gradient downhill the controller is, in a still further embodiment, arranged to rely on wheel speed sensors and vehicle accelerometers.

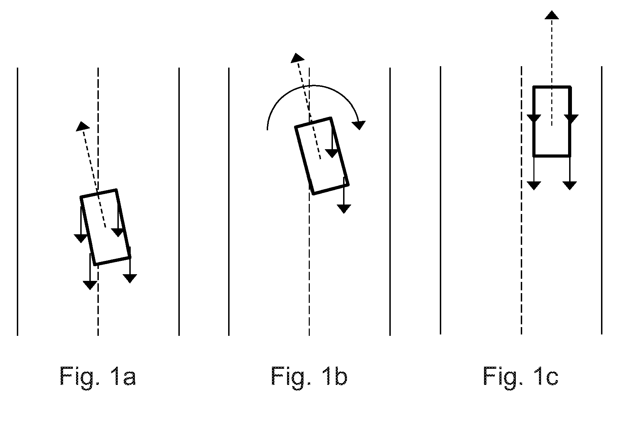

Figure 1 illustrates the underlying principle of the above described controller. In this example the vehicle is running downhill on a glare ice road, i.e. in the general direction of the dashed arrow. The full straight arrows represent tyre forces. The driver desires to stop the vehicle. However, this is not possible since the available friction is insufficient to hold the vehicle on the glare ice road. This may be illustrated by the below expression.

$$m \times g \times \sin(\text{roadgradient}) > m \times g \times \text{friction\_coefficient}$$

In figure 1A the driver of the vehicle applies the brakes of the vehicle, but the vehicle continues to move downhill with the brakes thereof fully actuated. Since the vehicle in figure 1A is heading towards the opposite lane, a potentially dangerous situation is underway.

The driver of the vehicle will most likely try to steer to the right, but this will, however, have very limited or no effect. Moreover, a brake intervention from a conventional anti-skid control system would normally not be able to bring the vehicle back to the lane originally travelled, in particular if the anti-skid control system is activated at the same time as an Anti-Lock Brake System (ABS) is engaged on all wheels of the vehicle.

In figure 1B the proposed controller, in order to bring the vehicle back to the lane originally travelled, starts to release the brake forces on the left hand side of the vehicle, i.e. the side of the vehicle opposite to the desired turning direction as commanded by the driver of the vehicle.

In order to enable this functionality, in one embodiment, friction between the road and the wheels of the vehicle as well as a road gradient downhill is detected. Although the functionality, in other embodiments, may be enabled when there is no road gradient downhill, the combination of low friction and a road gradient downhill is likely to give the vehicle a considerable or infinite stopping distance. This means that the risk of hitting an obstacle will increase significantly during low friction when travelling downhill as compared to the same situation when travelling on an essentially flat road. Enabling of this functionality may be done by the controller using information from wheel speed sensors and vehicle accelerometers. In essence, this functionality is enabled if the vehicle accelerates even as all wheels thereof are fully braked.

Through cancelling the brake forces on the left hand side of the vehicle, as illustrated in figure 1B, a yaw moment, as illustrated by the curved full arrow, is generated due to the created unbalance of generated longitudinal tyre forces on the left hand side and right hand side of the vehicle respectively. This differs from a conventional anti-skid control system which will never cancel brake forces. Thus, the yaw moment will be generated by removing individual brake forces rather than adding brake forces, as would be the case for a conventional anti-skid intervention.

The yaw moment thus generated, as illustrated by the curved full arrow, will now turn the vehicle back to the original lane, as illustrated in figure 1C, and at this stage the functionality is disabled and all the wheels of the vehicle are fully braked once more.

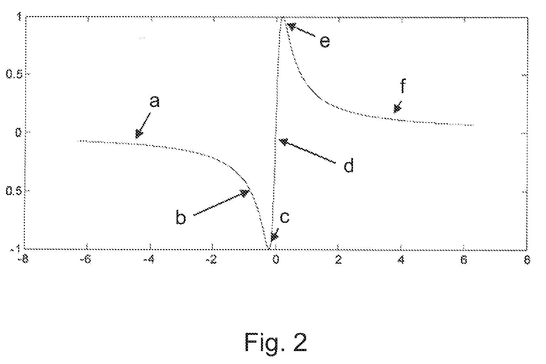

Figure 2 shows the conceptual force generation from a tyre. The y-axis represents the longitudinal force, which is normalized such that 1 corresponds to a maximum longitudinal force. The x-axis represents the longitudinal slip, where 0 corresponds to free rolling and -1 to a locked wheel. Wheel spinning means that longitudinal slips are far outside the linear region of the tyre characteristics, typically less than -2 or higher than 2.

In figure 2, a) corresponds to the wheel spinning backwards, b) corresponds to the wheel being braked to be locked, c) corresponds to maximum braking force during ABS braking, d) corresponds to a free rolling wheel, e) corresponds to maximum traction force, and f) corresponds to the wheel spinning forwards.

From figure 2 it is clear that the longitudinal force is significantly smaller when the wheel spins compared to a free rolling or locked wheel.

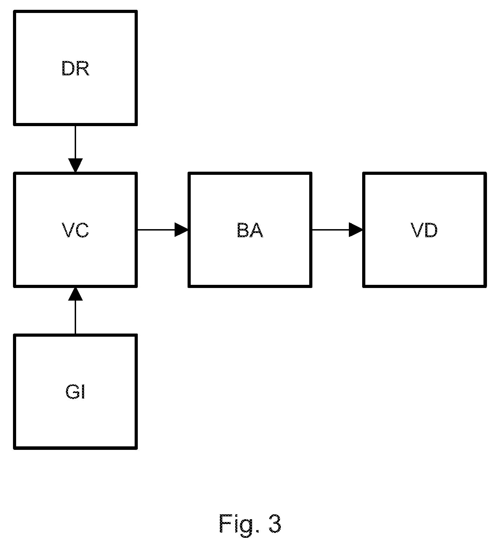

Figure 3 illustrates schematically how glare-ice detection GI enables the vehicle controller VC to override driver request DR and thus cancel brake forces via the brake actuator BA when necessary for controlling the vehicle dynamics VD, as described above.

The present application also provides a method in a controller for assisting a driver of a vehicle to turn the vehicle when driving during glare ice conditions, the vehicle having a steering system, a plurality of wheels and a brake system allowing individual braking of the respective wheels of the vehicle.

The method comprises the steps of: detecting if the vehicle accelerates after the brakes of the vehicle have been applied; and detecting a driver command to turn the vehicle in either direction. If all detections are positive the method comprises the further step of releasing the brake force on a side of the vehicle opposite to the detected turning command direction.

In one embodiment of the method further comprises the step of detecting if a vehicle velocity is below a predetermined velocity threshold.

In an alternative embodiment the method comprises the further steps of: detecting low friction between the road and the wheels of the vehicle; and detecting a road gradient downhill.

In a yet further embodiment the method comprises the further step of detecting low friction between the road and the wheels of the vehicle and detecting a road gradient downhill relying on wheel speed sensors and vehicle accelerometers.

In accordance with the present application is also envisaged a vehicle comprising an arrangement as described above.

The above-described embodiments may be varied within the scope of the following claims.

Thus, while there have been shown and described and pointed out fundamental novel features of the embodiments herein, it will be understood that various omissions and substitutions and changes in the form and details of the devices illustrated, and in their operation, may be made by those skilled in the art. For example, it is expressly intended that all combinations of those elements and/or method steps which perform substantially the same function in substantially the same way to achieve the same results are equivalent. Moreover, it should be recognized that structures and/or elements and/or method steps shown and/or described in connection with any disclosed form or embodiment herein may be incorporated in any other disclosed or described or suggested form or embodiment as a general matter of design choice.

**Claims**

1. An arrangement for assisting a driver of a vehicle to turn the vehicle when driving during glare ice conditions, the vehicle having a steering system, a plurality of wheels and a brake system allowing individual braking of the respective wheels of the vehicle, **characterized in that** the arrangement comprises a controller arranged to:

   detect if the vehicle accelerates after the brakes of the vehicle have been applied;
   detect a driver command to turn the vehicle in either direction;
   if all detections are positive release the brake force on a side of the vehicle opposite to the detected turning command direction.

2. An arrangement according to claim 1, **characterized in that** the controller further is arranged to detect if a vehicle velocity is below a predetermined velocity threshold.

3. An arrangement according to any one of claims 1 to 2, **characterized in that** the controller, in order to detect if the vehicle accelerates after the brakes of the vehicle have been applied, is arranged to: detect low friction between the road and the wheels of the vehicle; and detect a road gradient downhill.

4. An arrangement according to claim 3, **characterized in that** the controller, in order to detect low friction between the road and the wheels of the vehicle and detect a road gradient downhill, is arranged to rely on wheel speed sensors and vehicle accelerometers.

5. A method in a controller for assisting a driver of a vehicle to turn the vehicle when driving during glare ice conditions, the vehicle having a steering system, a plurality of wheels and a brake system allowing individual braking of the respective wheels of the vehicle, **characterized in that** it comprises the steps of:

   detecting if the vehicle accelerates after the brakes of the vehicle have been applied;
   detecting a driver command to turn the vehicle in either direction;
   if all detections are positive releasing the brake force on a side of the vehicle opposite to the detected turning command direction.

6. A method according to claim 5, **characterized in that** it further comprises the step of detecting if a vehicle velocity is below a predetermined velocity threshold.

7. A method according to any one of claims 5 to 6, **characterized in that** it further comprises the steps of: detecting low friction between the road and the wheels of the vehicle; and detecting a road gradient downhill.

8. A method according to claim 7, **characterized in that** it further comprises the step of detecting low friction between the road and the wheels of the vehicle and detecting a road gradient downhill relying on wheel speed sensors and vehicle accelerometers.

9. A vehicle **characterized in that** it comprises an arrangement according to any one of claims 1 to 4.

**Patentansprüche**

1. Anordnung zum Unterstützen eines Fahrers eines Fahrzeugs beim Lenken des Fahrzeugs bei überfrierender Nässe, wobei das Fahrzeug ein Lenksystem, mehrere Räder und ein Bremssystem aufweist, das ein individuelles Bremsen der jeweiligen Räder des Fahrzeugs erlaubt,
   **dadurch gekennzeichnet, dass** die Anordnung eine Steuereinheit umfasst, die für Folgendes ausgelegt ist:

   Detektieren, ob das Fahrzeug beschleunigt, nachdem die Bremsen des Fahrzeugs betätigt wurden;
   Detektieren eines Fahrerbefehls zum Lenken des Fahrzeugs in die eine oder andere Richtung;
   wenn alle Detektionen positiv sind, Lösen der Bremskraft auf einer Seite des Fahrzeugs, die der detektierten Lenkbefehlrichtung entgegengesetzt ist.

2. Anordnung nach Anspruch 1, **dadurch gekennzeichnet, dass** die Steuereinheit des Weiteren dafür ausgelegt ist, zu detektieren, ob eine Fahrzeuggeschwindigkeit unterhalb einer zuvor festgelegten Geschwindigkeitsschwelle liegt.

**3.** Anordnung nach einem der Ansprüche 1 bis 2, **dadurch gekennzeichnet, dass** die Steuereinheit, um zu detektieren, ob das Fahrzeug beschleunigt, nachdem die Bremsen des Fahrzeugs betätigt wurden, dafür ausgelegt ist: eine geringe Reibung zwischen der Straße und den Rädern des Fahrzeugs zu detektieren; und einen Gefällegrad der Straße zu detektieren.

**4.** Anordnung nach Anspruch 3, **dadurch gekennzeichnet, dass** die Steuereinheit, um eine geringe Reibung zwischen der Straße und den Rädern des Fahrzeugs zu detektieren und einen Gefällegrad der Straße zu detektieren, dafür ausgelegt ist, sich auf Raddrehzahlsensoren und Fahrzeugbeschleunigungsmesser zu stützen.

**5.** Verfahren in einer Steuereinheit zum Unterstützen eines Fahrers eines Fahrzeugs beim Lenken des Fahrzeugs bei überfrierender Nässe, wobei das Fahrzeug ein Lenksystem, mehrere Räder und ein Bremssystem aufweist, das ein individuelles Bremsen der jeweiligen Räder des Fahrzeugs erlaubt, **dadurch gekennzeichnet, dass** es folgende Schritte umfasst:

Detektieren, ob das Fahrzeug beschleunigt, nachdem die Bremsen des Fahrzeugs betätigt wurden;
Detektieren eines Fahrerbefehls zum Lenken des Fahrzeugs in die eine oder andere Richtung;
wenn alle Detektionen positiv sind, Lösen der Bremskraft auf einer Seite des Fahrzeugs, die der detektierten Lenkbefehlrichtung entgegengesetzt ist.

**6.** Verfahren nach Anspruch 5, **dadurch gekennzeichnet, dass** es des Weiteren den Schritt des Detektierens umfasst, ob eine Fahrzeuggeschwindigkeit unterhalb einer zuvor festgelegten Geschwindigkeitsschwelle liegt.

**7.** Verfahren nach einem der Ansprüche 5 bis 6, **dadurch gekennzeichnet, dass** es des Weiteren folgende Schritte umfasst: Detektieren einer geringen Reibung zwischen der Straße und den Rädern des Fahrzeugs; und Detektieren eines Gefällegrades der Straße.

**8.** Verfahren nach Anspruch 7, **dadurch gekennzeichnet, dass** es des Weiteren den Schritt des Detektierens einer geringen Reibung zwischen der Straße und den Rädern des Fahrzeugs sowie des Detektierens eines Gefällegrades der Straße unter Stützung auf Raddrehzahlsensoren und Fahrzeugbeschleunigungsmesser umfasst.

**9.** Fahrzeug, **dadurch gekennzeichnet, dass** es eine Anordnung nach einem der Ansprüche 1 bis 4 umfasst.

**Revendications**

**1.** Système d'assistance à un conducteur d'un véhicule pour faire virer le véhicule lors de la conduite dans des conditions de gel éblouissantes, le véhicule comportant un système de direction, une pluralité de roues et un système de freinage permettant un freinage individuel des roues respectives du véhicule, **caractérisé en ce que** le système comprend un dispositif de commande conçu pour :

détecter si le véhicule accélère après l'application des freins du véhicule ;
détecter une instruction du conducteur de faire virer le véhicule dans l'une ou l'autre direction ;
si toutes les détections sont positives, relâcher la force de freinage sur un côté du véhicule opposé à la direction de l'instruction de virage détectée.

**2.** Système selon la revendication 1, **caractérisé en ce que** le dispositif de commande est en outre conçu pour détecter si une vitesse du véhicule est inférieure à un seuil de vitesse prédéterminé.

**3.** Système selon l'une quelconque des revendications 1 et 2, **caractérisé en ce que** le dispositif de commande, afin de détecter si le véhicule accélère après l'application des freins du véhicule, est conçu pour : détecter un faible frottement entre la route et les roues du véhicule ; et détecter une inclinaison de route descendante.

**4.** Système selon la revendication 3, **caractérisé en ce que** le dispositif de commande, afin de détecter un faible frottement entre la route et les roues du véhicule et de détecter une inclinaison de route descendante, est conçu pour faire appel à des capteurs de vitesse de roue et à des accéléromètres de véhicule.

**5.** Procédé, dans un dispositif de commande, d'assistance à un conducteur d'un véhicule pour faire virer le véhicule lors de la conduite dans des conditions de gel éblouissantes, le véhicule comportant un système de direction, une pluralité de roues et un système de freinage permettant un freinage individuel des roues respectives du véhicule, **caractérisé en ce qu'**il comprend les étapes consistant à :

détecter si le véhicule accélère après l'application des freins du véhicule ;
détecter une instruction du conducteur de faire virer le véhicule dans l'une ou l'autre direction ;
si toutes les détections sont positives, relâcher la force de freinage sur un côté du véhicule opposé à la direction de l'instruction de virage détectée.

6. Procédé selon la revendication 5, **caractérisé en ce qu'**il comprend en outre l'étape consistant à détecter si une vitesse du véhicule est inférieure à un seuil de vitesse prédéterminé.

7. Procédé selon l'une quelconque des revendications 5 et 6, **caractérisé en ce qu'**il comprend en outre les étapes consistant à : détecter un faible frottement entre la route et les roues du véhicule ; et détecter une inclinaison de route descendante.

8. Procédé selon la revendication 7, **caractérisé en ce qu'**il comprend en outre l'étape consistant à détecter un faible frottement entre la route et les roues du véhicule et détecter une inclinaison de route descendante en faisant appel à des capteurs de vitesse de roue et à des accéléromètres de véhicule.

9. Véhicule **caractérisé en ce qu'**il comprend un système selon l'une quelconque des revendications 1 à 4.

Fig. 1a        Fig. 1b        Fig. 1c

Fig. 2

Fig. 3

**EP 2 562 059 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0212037 A1